# EUROPEAN PATENT SPECIFICATION

(11) **EP 0 429 524 B1**
(45) Date of publication and mention of the grant of the patent: **14.12.1994**
(21) Application number: 89909724.0
(22) Date of filing: 17.08.1989
(51) Int. Cl.: B62H 5/00

(54) **LOCKING DEVICE FOR LOCKING A BICYCLE**
VERRIEGELUNGSANORDNUNG FÜR FAHRRÄDER
CADENAS POUR BICYCLETTES

(30) Priority: 18.08.1988 DK 4652/88
(43) Date of publication of application: 05.06.1991
(73) Proprietor: BASTA LASEFABRIK A/S, 4220 Korsor (DK)
(72) Inventor: DUNCH, Poul, Pedersen, DK-2765 Sm rum (DK)
(74) Representative: Larsen, Hans Ole
(86) International application number: PCT/DK89/00196
(87) International publication number: WO 90/02074

(56) References cited:
- DE-A- 845 014
- FR-A- 2 610 276
- FR-B- 841 643
- US-A- 3 965 709
- US-A- 4 033 160

## Description

The invention relates to a lock for the locking of a spoked wheel on a bicycle, moped or a similar vehicle and as disclosed in the preamble of claim 1.

Commonly known bicycle locks are used for the locking of a spoked wheel. In most cases, such locks are sufficient to prevent unauthorized removal of the bicycle. However, there are situations in which the possibilities exist of breaking open such locks, which in practice means when there is time enough for this work to be carried out undisturbed.

In such cases, the ordinary bicycle locks are not able to afford the necessary resistance against being broken open, the consequence being that these locks are often supplemented with so-called chain- or cable-locks.

These consist of a piece of chain or cable of a length, for example, of between 50 and 150 cm. The ends of the cable or chain can be locked together, either in an integrated lock housing or by means of a loose padlock.

This extra locking equipment enables the bicycle to be further secured, in that the cable or the chain can surround the spoked wheel as well as the frame and possibly also an external element such as a bicycle rack, a post or a lamp post.

Solely from the point of view of security, this solution is satisfactory, but it involves considerable inconvenience for the user. For example, the cable- or the chain-lock has to be taken along on the journey, which can be in an inconvenience since it takes up room in a bag, pocket, basket or carrier, and there is also the inconvenience of the extra key, which the lock requires, and which must similarly be taken care of.

Finally, this cable or chain-lock requires the use of both hands for its mounting and operation, i.e. locking and unlocking. This is due to the fact that the cable or chain-lock is difficult to manipulate because of its springy characteristics in relation to the bicycle, which therefore requires that the cable or chain-lock must be held firmly with the one hand while the locking parts are brought together and locked.

In order to avoid these inconveniences, it is known from the nearest prior art US, A, 4 033 160 to incorporate a cable in a lock with a C-shaped locking member.

This locking device with built-in cable-lock is an improvement in relation to the known lock combined with a loose cable-lock, but it is only of help with regard to the actual handling. This locking device is arranged in such a manner that the C-shaped locking member and the locking piece can be secured independently of each other but can be released at the same time, which can result in inadequate locking when only the cable lock is used. The cable-lock is a relatively inferior lock, and therefore a poorer lock than the actual bicycle lock with blocking member.

From DE, A, 845 014 and FR, A1, 2 610 276 locks are also known having a locking arm which by locking of a bicycle is inserted between the spokes of a wheel, which locks also have a chain and a cable which can be placed around a stationary object in order to prevent unlawful removal of the bicycle from its place.

These known locks are only intended to be placed on the one fork leg of a bicycle, and no receiving part is found on the other fork leg.

These known locks will therefore comparatively easily be wrought around the fork leg on which they are placed, after which the locking arm will be kept from engaging into the spoked wheel, as a consequence of which these locks only offer limited security against theft.

The object of the invention is to avoid the disadvantages of the known constructions, and this object is achieved with a lock of the initially described kind, the said lock according to the invention being characteristic in that the second locking element is in mechanical connection with the first locking element so as to provide securing of the locking piece in the locking aperture only when the blocking element is secured by the first locking element.

It becomes possible hereby to lock by a combination of the two locking arrangements by means of one and the same lock, and with the use of only one hand. In addition to the considerable operational advantages of this construction, considerable security lies in the fact that both locks must always be used in order thereby to provide a double locking of the bicycle.

The lock according to the invention is based on the idea that the locking ring is the main lock, and that the locking piece merely is to serve as a supplementary locking device in that the lock is constructed so that the locking ring must always be operated irrespective of whether the locking piece is used or not, whereas the locking piece on the other hand can only be operated when the locking ring is in its blocking position where the spoked wheel is blocked.

In other words, the locking piece and the chain or cable connected thereto cannot be used individually but only when the main lock, i.e. the locking ring is locked.

This arrangement provides optimum security, the main lock being the strongest and thus being able to resist attempts by unauthorized persons at forcing the lock open.

It is precisely because of this blocking of the use of the cable-lock alone that the lock according to the invention affords a significant safeguard, the reason being that the cable- or the chain-lock must always be used at the same time as the fixed lock.

As disclosed in claim 2, by allowing the locking elements to lock both the locking ring and the locking piece on the chain or the cable, one can suffice with a single locking element and thereby simplify the operation.

Finally, as disclosed in claim 3, it is expedient to use two pawl systems which can be disengaged simultaneously, in that the possibility is hereby provided of building up a compact and robust release construction.

The lock according to the invention will now be described in more detail with reference to the drawing, where:
- Fig. 1: shows a lock according to the invention with locking ring and cable-lock with common locking element, seen from the front and with a part-section seen in the direction I-I in fig. 3,
- fig. 2: shows a section through this lock before the securing, seen in the direction II-II in fig. 1,
- fig. 3: shows a section through the lock in the secured position, seen in the direction III-III, and
- fig. 4: shows another embodiment of a lock according to the invention with locking ring and cable-lock seen from the front and partly in section,

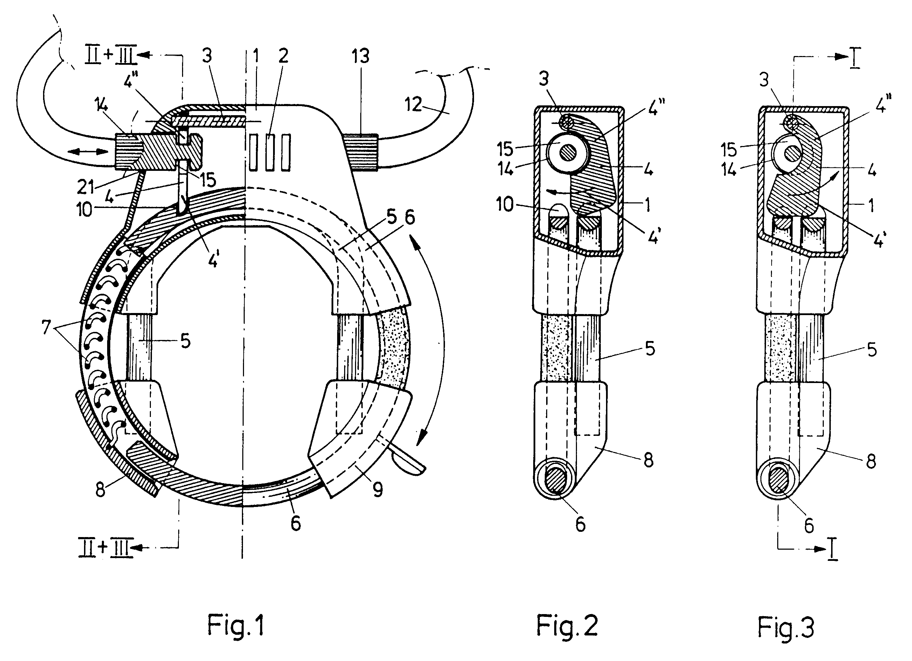

In figs. 1-3 is shown an example of an embodiment of a ring-lock with a combination lock and provided with an integrated cable-lock.

The lock comprises a lock housing 1 with a keyboard 2 and a retaining part 9 in which a blocking element 6 consisting of a locking ring can slide towards and away from an engagement part 8. The blocking element 6 has a locking track 10 in the form of a recess or groove.

In order to strengthen the lock, there is also built in a steel hoop 5, which extends on the back of the housing and into the engagement and retaining parts 8, 9.

From the one side of the housing, there extends a cable 12 which is securely fastened to the housing 1 or means 13 attached thereto.

The cable has a suitable diameter of, for example, 8 or 9 mm, and can be coated with clear plastic. The length can be, for example, 50 cm or more depending on requirements.

At the opposite end of the cable there is secured a locking piece 14 with a locking groove 15 in the form of a notch or recess.

This locking piece 14 can be inserted into a locking track 21 in the side of the housing.

The housing 1 has built-in locking elements in the form of a plate-formed pawl 4 said pawl 4 consisting of two locking elements, a first locking element 4' and a second locking element 4''. The pawl is suspended in an upper axle 3 so that it can move from an unlocked position as shown in fig. 2, where the part of the pawl 4 which consists of the second locking element 4'' is free of engagement with the groove 15 in the locking piece 14 and of the part of the pawl 4 which consists of the first locking element 4' also is free of engagement with the groove 10 in the blocking element 6.

When the lock is to be activated, the blocking element 6 is moved until the part of the pawl 4 which concists of the first locking element 4' engages with the groove 10. Hereafter, the locking piece 14 can be inserted in the locking track 21 and be secured by the rest of the pawl 4 consisting of the second locking element 4'' which engages with the locking groove 15 as shown in fig. 3.

The pawl 4 turns about the axle 3. The pawl 4 will thus rest against the surface of the blocking element 6 as long as the locking ring is either in its releasing position or is moving towards its blocking position.

By the abutment of the pawl 4 against the surface of the blocking element 6 the pawl is prevented from swinging so far in the direction towards the locking aperture 21 that part of the pawl 4, which consists of the second locking element 4'', would be able to hold the locking piece 14 in the locking aperture 21.

Not until the blocking element 6 is in its blocking position will the pawl 4 be able to turn into engagement with the locking groove 10 in the blocking element 6 whereby the pawl 4 can also swing into the locking aperture 21.

If the locking piece 14 in this position is inserted into the locking aperture 21, the part of the pawl 4'' will engage in the locking groove 15 of the locking piece 14.

If, on the other hand, the locking piece 14 is not inserted in the locking aperture 21 when the blocking element 6 is placed in the blocking position, the locking piece 14 will due to the chamfering on its free end be able to be pressed into the locking aperture 21 and so far back that the locking piece 14 can be inserted fully into the locking aperture 21, after which the pawl 4 will engage with the locking trace 15 of the locking piece 14 when this is opposite the part of the pawl 4''.

The locking piece 14 with chain or wire 12 will hereby also be locked when the blocking element 6 is locked.

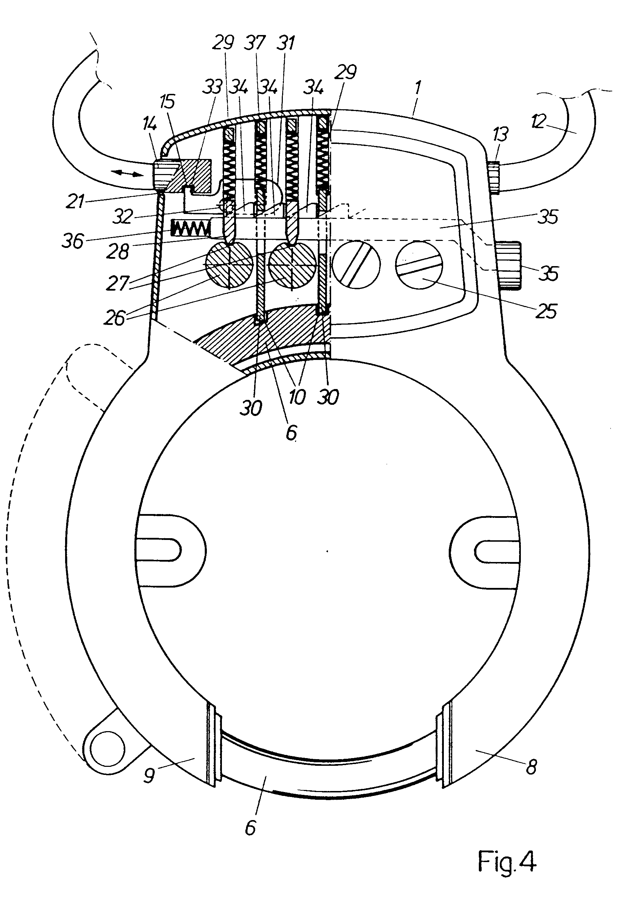

In fig. 4 is shown an example of an embodiment in which the locking elements are controlled by a combination lock.

The combination is set by means of knobs 25 placed externally on the front of the housing 1. Each knob 25 is connected to a disk 26 inside the housing, said disks being provided with a notch 27 in their periphery.

When the combination lock is set for opening, all of the notches 27 point upwards as shown in fig. 4.

Opposite each of the disks 26 there is mounted a pin 28 which is pressed by means of a spring 29 towards the periphery of the disk 26. On the drawing the lock is shown in the unlocked position. In this position, a transverse release arm 35 can be pressed in with a finger from outside against the pressure of a spring 36 at the end of the arm, in that the lowered position of the pins 28 releases a not-shown blocking of the movability of the arm 35. In other words, the arm 35 can only be pressed in when the lock is correctly coded for unlocking. On the arm 35 there are mounted a number of wedge elements 34 which are able to lift associated locking pawls, as will be explained in the following.

The blocking element 6 in the example shown has two locking grooves 10 for the first locking element consisting of pawls 30. These pawls 30 are also pressed down by means of a spring 29.

The pawls 30 are provided with a recess against which a wedge element 34 can lie, and as shown lift the pawls 30 free of the locking grooves 10 when the arm 35 is pressed in towards the left of the drawing.

The outer pawl 30 is further provided with a dog 37 which is in engagement with a rocker-pawl 31 which can pivot around an axle 32 in the housing 1. The end of this pawl forms a locking pawl 33 which can engage with the locking groove 15 in the locking piece 14.

As mentioned, in the position shown the lock is coded for opening, and will upon the pressing-in of the arm 35 lift the two locking pawls 30 free of the locking grooves 10 in the blocking element 6, whereupon by means of a spring this will be moved out of the engaging part 8 and into the retaining part 9. At the same time, the locking pawl 31 will be moved upwards by the locking pawl 30, thus swinging free of the locking part 15, upon which the locking piece 14 can be withdrawn.

When locking, it should be noted that a precondition for the locking of the locking piece 14 is that the blocking element 6 is in the locked position, whereby it is ensured that the ring-lock as well as the cable-lock are always locked.

In the examples shown, the pawl is operated by a combination lock, but it lies within the scope of the invention to allow the pawl's movement to be controlled by other systems. Similarly, the pawl can have another suspension and appearance, depending on the lock system selected.

## Claims

1. Lock with a housing (1) for the locking of a spoked wheel on a bicycle, moped or a similar vehicle, said lock having a first locking part comprising a retaining part (9) in which a blocking element (6) in the form of a locking ring is housed and is movable between a releasing position and a blocking position, where the blocking element (6) is in engagement with an engaging part (8) and in which engaging part (8) the locking ring in said blocking position can be secured by means of a first locking element (4'; 30) in the housing, and further having a second locking part comprising a locking aperture (21) in which a locking piece (14) can be introduced and secured by means of a second locking element (4''; 33), said locking piece (14) being fastened at the free end of a cable or chain (12) having the other end (13) fastened to the housing (1), **characterized** in that the second locking element (4''; 33) is in physical or mechanical connection with the first locking element (4', 30) so as to provide securing of the locking piece (14) in the locking aperture (21) only when the blocking element (6) is secured by the first locking element (4'; 30).

2. Lock according to claim 1, **characterized** in that the first locking element (4'; 30) comprises one or more pawls (4'; 30) and that the second locking element for the locking piece (14) comprise a pawl (4''; 33) which can only be moved into engagement with a locking groove (15) in the locking piece (14) when the pawl or pawls of the first locking element (4'; 30) is/are in engagement with the locking groove or grooves (10) in the blocking element (6).

3. Lock according to claim 2, **characterized** in that the pawl or pawls (4'; 30) is/are hinged (37) to the second locking element (4''; 33) and suspended (32) in a surrounding lock housing (1) in such a manner that a direct displacement of the pawl or pawls of the first locking element (4'; 30) into and out of the locking groove or grooves (10) in the blocking element (6) will move the second locking element (4''; 33) into and out of the locking groove (15) in the locking piece (14).

## Patentansprüche

1. Schloß mit einem Gehäuse (1) zum Verriegeln eines Speichenrades an einem Fahrrad, Moped oder einem ähnlichen Fahrzeug, wobei das Schloß ein erstes Verriegelungsteil aufweist, das ein Halteteil (9) umfaßt, in welchem ein Arretierungselement (6) in Form eines Verriegelungsringes aufgenommen ist und beweglich ist zwischen einer Entriegelungsposition und einer Arretierungsposition, in der das Arretierungselement (6) in Eingriff mit einem Eingriffsteil (8) befindlich ist und der Verriegelungsring in dem Eingriffsteil (8) in der Arretierungsposition mittels eines ersten Verriegelungselementes (4'; 30) in dem Gehäuse gesichert werden kann, wobei das Schloß ferner ein zweites Verriegelungsteil aufweist, das eine Verriegelungsöffnung (21) umfaßt, in die ein Verriegelungsteil (14) eingeführt und mittels eines zweiten Verriegelungselementes (4''; 33) gesichert werden kann, wobei das Verriegelungsteil (14) an dem freien Ende eines Kabels oder einer Kette (12) befestigt ist, und dessen (deren) andere(s) Ende (13) an dem Gehäuse (1) befestigt ist, **dadurch gekennzeichnet,** daß das zweite Verriegelungselement (4''; 33) in körperlicher oder mechanischer Verbindung mit dem ersten Verriegelungselement (4'; 30) befindlich ist, so daß ein Sichern des Verriegelungsteiles (14) in der Verriegelungsöffnung (21) nur dann geschaffen wird, wenn das Arretierungselement (6) durch das erste Verriegelungselement (4'; 30) gesichert ist.

2. Schloß nach Anspruch 1, **dadurch gekennzeichnet,** daß das erste Verriegelungselement (4'; 30) eine oder mehrere Klinken (4'; 30) umfaßt, und daß das zweite Verriegelungselement für das Verriegelungsteil (14) eine Klinke (4''; 33) umfaßt, die nur in Eingriff mit einer Verriegelungsnut (15) in dem Verriegelungsteil (14) bewegt werden kann, wenn die Klinke oder Klinken des ersten Verriegelungselementes (4'; 30) in Eingriff mit der Verriegelungsnut oder -nuten (10) des Arretierungselementes (6) befindlich ist (sind).

3. Schloß nach Anspruch 2, **dadurch gekennzeichnet,** daß die Klinke oder die Klinken (4'; 30) an dem zweiten Verriegelungselement (4''; 33) angelenkt ist (sind) und in einem umgebenden Schloßgehäuse (1) in einer solchen Weise (32) aufgehängt sind, daß eine direkte Verschiebung der Klinke oder der Klinken des ersten Verriegelungselementes (4'; 30) in die oder aus der Verriegelungsnut oder -nuten (10) in das Arretierungselement (6) das zweite Verriegelungselement (4''; 33) in die bzw. aus der Verriegelungsnut (15) in dem Verriegelungsteil (14) bewegt.

## Revendications

1. Antivol comportant un boîtier (1) pour le blocage d'une roue à rayons d'une bicyclette, motocyclette ou véhicule analogue, ledit antivol comprenant une première partie de verrouillage comprenant une partie de retenue (9) dans laquelle est logé un élément de blocage (6) se présentant sous la forme d'un anneau de verrouillage, ledit élément étant mobile entre une position de déverrouillage et une position de blocage, dans lequel l'élément de blocage (6) est en engagement avec une partie d'engagement (8) et dans laquelle partie d'engagement (8) l'anneau de verrouillage dans ladite position de blocage peut être fixé au moyen d'un premier élément de verrouillage (4', 30) dans le boîtier, et comprenant en outre une seconde partie de verrouillage comprenant une ouverture de verrouillage (21) dans laquelle une pièce de verrouillage (14) peut être introduite et fixée au moyen d'un second élément de verrouillage (4'', 33), ladite pièce de verrouillage (14) étant fixée à l'extrémité libre d'un câble ou d'une chaîne (12) dont l'autre extrémité (13) est fixée au boîtier (1), caractérisé en ce que le second élément de verrouillage (4'', 33) est relié physiquement ou mécaniquement avec le premier élément de verrouillage (4', 30) de façon à assurer la fixation de la pièce de verrouillage (14) dans l'ouverture de verrouillage (21) seulement lorsque l'élément de blocage (6) est fixé par le premier élément de verrouillage (4', 30).

2. Antivol selon la revendication 1,
caractérisé en ce que le premier élément de verrouillage (4', 30) comprend un ou plusieurs cliquets (4', 30) et en ce que le second élément de verrouillage pour la pièce de verrouillage (14) comprend un cliquet (4'', 33) qui peut seulement être déplacé en engagement avec la gorge de verrouillage (15) dans la pièce de verrouillage (14) lorsque le ou les cliquets du premier élément de verrouillage (4', 30) est/sont en engagement avec la ou les gorges de verrouillage (10) dans l'elément de blocage (6).

3. Antivol selon la revendication 2,
caractérisé en ce que le ou les cliquets (4', 30) est/sont articulés (37) au second élément de verrouillage (4'', 33) et sont suspendus (32) dans un boîtier (1) de verrouillage qui l'entoure de telle façon qu'un déplacement direct du ou des cliquets du premier élément de verrouillage (4', 30) dans et hors de la ou les gorges de verrouillage (10) dans l'élément de blocage (6) déplacera le second élément de verrouillage (4'', 33) dans et hors de la gorge de verrouillage (15) formée dans la pièce de verrouillage (14).
